# EUROPÄISCHE PATENTANMELDUNG

(11) **EP 0 933 269 A1**
(43) Veröffentlichungstag der Anmeldung: **04.08.1999**
(21) Anmeldenummer: 98123972.6
(22) Anmeldetag: 17.12.1998
(51) Int. Cl.: B60T 7/04

(54) **Verfahren und Vorrichtung zum Abbremsen von Fahrzeugen**

(30) Priorität: 31.01.1998 DE 19803870
(71) Anmelder: DaimlerChrysler AG, 70567 Stuttgart (DE)
(72) Erfinder: Eberle, Walter, 73269 Hochdorf (DE)

(57) **Zusammenfassung**

Ein Verfahren zum Abbremsen von Fahrzeugen, ist durch folgende Schritte gekennzeichnet:
a) Es wird mittels einer ersten Einrichtung (10) die Entfernung und die Relativgeschwindigkeit zwischen dem Fahrzeug und einem Hindernis vor dem Fahrzeug bestimmt;
b) es werden gleichzeitig mittels wenigstens einer zweiten Einrichtung (20) Änderungen der Gas- und/oder Bremspedalstellungen erfaßt;
c) es wird ein automatischer Bremsvorgang nur dann eingeleitet, wenn folgende Bedingungen gleichzeitig erfüllt sind:
   - die Entfernung unterschreitet einen vorgegebenen Schwellwert,
   - die Relativgeschwindigkeit überschreitet einen vorgegebenen Schwellwert,
   - das Gaspedal wird sehr schnell zurückgenommen und/oder das Bremspedal wird betätigt.

## Beschreibung

Die Erfindung betrifft ein Verfahren und eine Vorrichtung zum Abbremsen von Fahrzeugen.

Verfahren und Vorrichtungen zum Abbremsen von Fahrzeugen, insbesondere zum automatischen Abbremsen von Fahrzeugen, sind in vielfältiger Weise aus dem Stand der Technik bekannt.

Aus der DE 33 25 714 A1, der DE 41 01 759 A1 sowie der DE 43 02 541 A1 gehen Verfahren und Vorrichtungen zum Abbremsen von Fahrzeugen hervor, bei denen mittels Sensoren die Relativgeschwindigkeit und der Abstand relativ zu einem vor dem Fahrzeug angeordneten Hindernis erfaßt werden und dann, wenn die Relativgeschwindigkeit eine vorgegebene Schwelle über- und der Abstand eine vorgegebene Schwelle unterschreitet, ein Bremsvorgang eingeleitet wird.

Problematisch bei derartigen Verfahren und Vorrichtungen ist es, daß ein Bremsvorgang in kritischen Fahrsituationen fehlerhaft eingeleitet werden kann. Beispielsweise kann es auf engen Fahrspuren, z.B. im Bereich von Autobahnbaustellen, zu Fehlmessungen und einer dadurch bedingten fehlerhaften Einleitung eines automatischen Bremsvorgangs durch ein auf einer Nachbarspur fahrendes Fahrzeug kommen. Bei diesen Verfahren und Vorrichtungen ist daher eine sichere Erkennung der Fahrszene, eine sichere Objektbestimmung und dadurch eine sichere Auslösung eines Bremsvorgangs nicht immer gewährleistet.

Darüber hinaus sind Vorrichtungen und Verfahren bekannt, die Einrichtungen zur Erfassung der Brems und/oder Gaspedalstellung eines Fahrzeugs aufweisen und bei welchen ein Bremsvorgang abhängig von der Brems- und/oder Gaspedalstellung automatisch eingeleitet wird. So geht beispielsweise aus der EP 0 706 466 B1 eine Vorrichtung zum Bremsen eines Fahrzeugs hervor, bei welcher bei einer reflexartigen Änderung der Position des rechten Fußes des Fahrers von einer ersten Stellung des Gaspedals in eine zweite Stellung ein automatischer Bremsvorgang ausgelost wird.

Aus der DE 44 40 290 C1 ist ein Verfahren zur Bestimmung eines Auslöseschwellenwertes für einen automatischen Bremsvorgang bekannt, bei dem eine Notbremsung daran erkannt wird, daß die Betätigungsgeschwindigkeit des Bremspedals einen Schwellenwert überschreitet. Wenn dies geschieht, wird ein automatischer Bremsvorgang durchgeführt, bei dem ein gegenüber dem Bremsdruck, der der Stellung des Bremspedals entspricht, erhöhter Bremsdruck erzeugt wird.

Problematisch bei derartigen Verfahren und Vorrichtungen zum Abbremsen eines Fahrzeuges ist es, daß es bei falsch eingeschätzten Fahrszenen und -situationen und bei einem Fehlverhalten des Fahrers, beispielsweise bei einer hektischen, schnellen Bremsbetätigung, zu ungewollten Vollbremsungen kommt, die insbesondere im Hinblick auf die Produkthaftung des Fahrzeugherstellers äußerst problematisch sind.

Der Erfindung liegt daher die Aufgabe zugrunde, ein Verfahren und eine Vorrichtung zum Abbremsen eines Fahrzeugs derart zu verbessern, daß die Erfassung von kritischen Fahrzuständen,
insbesondere Fahrszenen, bei denen ein Auffahrunfall möglich ist, verbessert wird und bei derartigen Fahrzuständen nicht nur ein Bremsvorgang automatisch eingeleitet, sondern die Einleitung eines derartigen automatischen Bremsvorgangs auch optimiert wird.

Diese Aufgabe wird bei einem Verfahren zum Abbremsen eines Fahrzeugs durch folgende Schritte gelost:
a) Es wird mittels wenigstens einer ersten Einrichtung die Entfernung und die Relativgeschwindigkeit zwischen dem Fahrzeug und einem Hindernis vor dem Fahrzeug bestimmt;
b) es werden gleichzeitig mittels wenigstens einer weiteren Einrichtung Änderungen der Gas- und/oder Bremspedalstellungen erfaßt;
c) es wird ein automatischer Bremsvorgang nur dann eingeleitet, wenn folgende Bedingungen gleichzeitig erfüllt sind:
   - Die Entfernung unterschreitet einen vorgegebenen Schwellenwert,
   - die Relativgeschwindigkeit überschreitet einen vorgegebenen Schwellenwert,
   - das Gaspedal wird sehr schnell zurückgenommen und/oder die Bremse wird betätigt.

Durch diese Verfahrensschritte wird ein automatischer Bremsvorgang nur dann eingeleitet, wenn eine Gaspedaländerung und/oder eine Bremspedalbetätigung durch den Fahrer vorliegt und wenn gleichzeitig eine Gefahrensituation, d.h. ein geringer Abstand und eine hohe Relativgeschwindigkeit zu einem vor dem Fahrzeug fahrenden weiteren Fahrzeug oder einem sich vor dem Fahrzeug befindenden Objekt exisitiert. Hierdurch ist auf besonders vorteilhafte Weise eine wesentlich bessere Erfassung kritischer Fahrzustände und dadurch auch eine schnelle und frühe Auslösung eines automatischen Bremsvorgangs möglich.

Eine vorteilhafte Ausführungsform des Verfahrens sieht vor, daß die Bremskraft des automatischen Bremsvorgangs auf die Relativgeschwindigkeit und die Entfernung zu einem vor dem Fahrzeug erfaßten Objekt angepaßt wird. Hierdurch wird auf sehr vorteilhafte Weise die Bremsverzögerung automatisch auf ein sich vor dem Fahrzeug befindendes Objekt oder auf ein vor dem Fahrzeug herfahrendes weiteres Fahrzeug, auch wenn dieses seine Geschwindigkeit ändert, angepaßt. Der Bremsvorgang wird jedoch immer durch den Fahrer ausgelöst oder eingeleitet, was aus Produkthaftungsgründen von außerordentlicher Bedeutung ist.

Die erfindungsgemäße Aufgabe wird darüber hinaus auch noch durch eine Vorrichtung zum Abbremsen eines Fahrzeugs gelöst, welche
- eine erste Einrichtung zur Erfassung und Bestimmung der Entfernung und der Relativgeschwindigkeit zwischen dem Fahrzeug und einem Hindernis vor dem Fahrzeug erfaßt und bestimmt,
- eine zweite Einrichtung zur Erfassung von Änderungen der Gaspedal- und/oder Bremspedalstellung,
- eine zentrale Steuereinheit zur Verarbeitung und Bewertung der von der ersten und zweiten Einrichtung erfaßten Daten und
- eine von der zentralen Steuereinheit ansteuerbare automatische Bremse
umfaßt.

Durch diese Vorrichtung wird auf vorteilhafte Weise ein Bremsvorgang mit optimaler, d.h. maximaler, auf die Entfernung und Relativgeschwindigkeit zwischen dem Fahrzeug und einem Hindernis vor dem Fahrzeug angepaßter Bremskraft ausschließlich durch eine Gaspedaländerung und/oder eine Bremspedaländerung, d.h. ausschließlich abhängig vom Fahrerwunsch ausgelöst.

Was die Einrichtung zur Erfassung der Entfernung und der Relativgeschwindigkeit zwischen dem Fahrzeug und einem Hindernis vor dem Fahrzeug betrifft, so sind rein prinzipiell die unterschiedlichsten Ausführungsformen denkbar.

Eine vorteilhafte Ausführungsform sieht vor, daß die Einrichtung zur Erfassung der Entfernung und der Relativgeschwindigkeit zwischen dem Fahrzeug und einem Hindernis vor dem Fahrzeug eine Radarmeßeinrichtung umfaßt.

Bei einer anderen vorteilhaften Ausführungsform ist vorgesehen, daß die Einrichtung zur Erfassung der Entfernung und der Relativgeschwindigkeit zwischen dem Fahrzeug und einem Hindernis vor dem Fahrzeug eine optische Meßeinrichtung zur Messung der Laufzeit eines emittierten, reflektierten und empfangenen Lichtsignals umfaßt.

Bei einer wiederum anderen, sehr vorteilhaften Ausführungsform ist vorgesehen, daß die Einrichtung zur Erfassung der Entfernung und der Relativgeschwindigkeit zwischen dem Fahrzeug und einem Hindernis vor dem Fahrzeug eine Bildverarbeitungseinrichtung umfaßt. Die weitere Einrichtung zur Erfassung der Änderung der Gaspedal- und/oder Bremspedaländerung weist vorteilhafterweise Sensoren zur Erfassung der Betätigungsgeschwindigkeit des Gas- und/oder Bremspedals auf.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: ein erstes Ausführungsbeispiel einer von der Erfindung Gebrauch machenden Vorrichtung zum Abbremsen eines Fahrzeugs und
- Fig. 2: ein zweites Ausführungsbeispiel einer von der Erfindung Gebrauch machenden Vorrichtung zum Abbremsen eines Fahrzeugs.

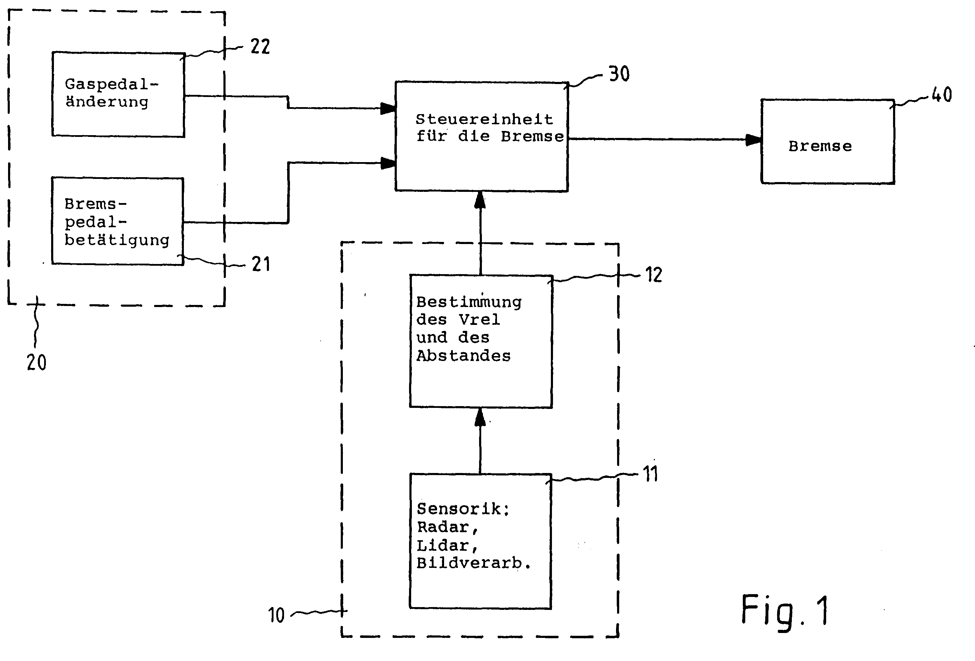

Ein Ausführungsbeispiel einer Vorrichtung zum Abbremsen eines Fahrzeugs, dargestellt in Fig. 1, umfaßt eine Einrichtung 10, welche die Entfernung und die Relativgeschwindigkeit zwischen dem Fahrzeug und einem Hindernis vor dem Fahrzeug, beispielsweise einem vor dem Fahrzeug herfahrenden Fahrzeug bestimmt. Die Einrichtung 10 umfaßt eine Sensorik 11 und einen Schaltungsteil 12, in welchem aus den von der Sensorik erfaßten Daten die Relativgeschwindigkeit und der Abstand zwischen dem Fahrzeug und einem Hindernis vor dem Fahrzeug bestimmt wird. Die Sensorik 11 kann beispielsweise eine an sich bekannte Radarmeßeinrichtung, eine Lidarmeßeinrichtung, d.h. eine Meßeinrichtung, welche die Laufzeit eines emittierten, von dem Hindernis reflektierten und wieder empfangenen Lichtsignals bestimmt, oder auch eine Bildverarbeitungseinrichtung sein, welche aus der zeitlichen Anderung aufgenommener Bilder den Abstand und die Relativgeschwindigkeit des vor dem Fahrzeug angeordneten und gegebenenfalls sich bewegenden Hindernis erfaßt wird.

Die von der ersten Einrichtung zur Erfassung und Bestimmung der Entfernung und der Relativgeschwindigkeit zwischen dem Fahrzeug und einem vor dem Fahrzeug angeordneten Hindernis ausgegebenen Daten werden einer Steuereinheit 30 für eine automatische Bremse 40 zugeführt.

Neben der Einrichtung 10 zur Erfassung der Relativgeschwindigkeit und des Abstandes zwischen dem Fahrzeug und einem vor dem Fahrzeug angeordneten Hindernis ist eine zweite Einrichtung 20 vorgesehen, welche Sensoren zur Erfassung der Bremspedalbetätigung 21 und/oder der Gaspedaländerung 22 aufweist. Die von der zweiten Einrichtung 20 ausgegebenen Daten werden ebenfalls der Steuereinheit 30 zugeführt.

Ein Verfahren zum Abbremsen eines Fahrzeugs mittels der in Fig. 1 dargestellten Vorrichtung umfaßt folgende Schritte. Es wird mittels der Einrichtung 10 der Abstand und die Relativgeschwindigkeit des Fahrzeugs zu einem vor dem Fahrzeug angeordneten Hindernis oder zu einem vor dem Fahrzeug fahrenden weiteren Fahrzeug erfaßt und bestimmt. Diese Daten werden der Steuereinheit 30 zugeführt. Gleichzeitig werden hierzu durch die weitere Einrichtung 20 Änderungen der Gas- und/oder Bremspedalstellungen erfaßt und diese Änderungen ebenfalls der Steuereinheit 30 zugeführt. In der Steuereinheit 30 werden die Daten verarbeitet. Ein automatischer Bremsvorgang wird nur dann eingeleitet, wenn gleichzeitig die Entfernung eine vorgegebene Schwelle unterschreitet, die Relativgeschwindigkeit eine vorgegebene Schwelle überschreitet, und wenn durch die Sensoren 22 zur Erfassung der Gaspedaländerung eine sehr schnelle Rücknahme des Gaspedals und/oder durch die Sensoren 21 zur Erfassung der Bremspedalbetätigung eine Betätigung der Bremse erfaßt wird.

In diesem Falle liegt eine Gefahrensituation vor, welche die Einleitung eines automatischen Bremsvorgangs nahelegt. Liegt ein solcher gefahrvoller Fahrzustand vor und wird die Einleitung eines Bremsvorgangs durch den Fahrer erfaßt, wird die Bremsverzögerung, d.h. die Bremskraft von der Steuereinheit 30 so angepaßt, daß das Fahrzeug möglichst noch vor einem vor dem Fahrzeug befindlichen Objekt oder hinter einem vor dem Fahrzeug fahrenden weiteren Fahrzeug zum Stillstand kommt. Es wird auf diese Weise sichergestellt, daß das Fahrzeug mit der optimalen, d.h. maximal erforderlichen Bremskraft abgebremst wird. Es versteht sich, daß der Sensor 22 bei einem elektronischen Gaspedal entfallen kann.

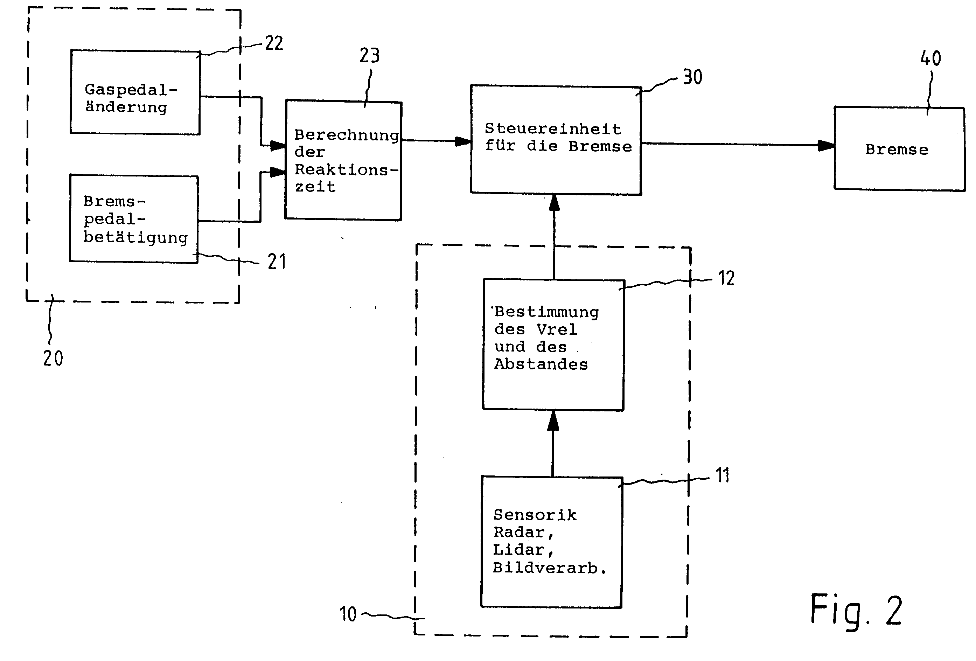

Bei einem zweiten Ausführungsbeispiel einer Vorrichtung zum Abbremsen eines Fahrzeugs, dargestellt in Fig. 2, sind diejenigen Elemente, die mit denen der ersten, in Fig. 1 dargestellten identisch sind, mit denselben Bezugszeichen versehen, so daß bezüglich deren Beschreibung auf die Ausführung zum ersten Ausführungsbeispiel voll inhaltlich Bezug genommen wird.

Im Gegensatz zum ersten Ausführungsbeispiel weist das zweite Ausführungsbeispiel einen der Einrichtung 20 zur Erfassung der Gas- und/oder Bremspedaländerung nachgeschalteten Schaltungsteil 23 auf, in welchem die Reaktionszeit des Fahrers berechnet wird. Durch Berechnung der Reaktionszeit wird insbesondere die Einleitung des Bremsvorgangs optimiert.

## Patentansprüche

1. Verfahren zum Abbremsen von Fahrzeugen, gekennzeichnet durch folgende Schritte:
a) es wird mittels einer ersten Einrichtung (10) die Entfernung und die Relativgeschwindigkeit zwischen dem Fahrzeug und einem Hindernis vor dem Fahrzeug bestimmt;
b) es werden gleichzeitig mittels wenigstens einer zweiten Einrichtung (20) Änderungen der Gas- und/oder Bremspedalstellungen erfaßt;
c) es wird ein automatischer Bremsvorgang nur dann eingeleitet, wenn folgende Bedingungen gleichzeitig erfüllt sind:
- die Entfernung unterschreitet einen vorgegebenen Schwellwert,
- die Relativgeschwindigkeit überschreitet einen vorgegebenen Schwellwert,
- das Gaspedal wird sehr schnell zurückgenommen und/oder das Bremspedal wird betätigt.

2. Verfahren nach Anspruch 1, dadurch gekennzeichnet, daß die Bremskraft des automatischen Bremsvorgangs auf die Relativgeschwindigkeit und die Entfernung angepaßt wird.

3. Vorrichtung zum Abbremsen eines Fahrzeugs umfassend:
a) eine erste Einrichtung (10) zur Erfassung und Bestimmung der Entfernung und der Relativgeschwindigkeit zwischen dem Fahrzeug und einem Hindernis vor dem Fahrzeug;
b) eine zweite Einrichtung (20) zur Erfassung von Änderungen der Gas- und/oder Bremspedalstellung;
c) eine zentrale Steuereinheit (30) zur Verarbeitung und Bewertung der von der ersten und zweiten Einrichtung (10, 20) erfaßten und bestimmten Daten;
d) eine von der zentralen Steuereinheit (30) ansteuerbare automatische Bremse (40).

4. Vorrichtung nach Anspruch 3, dadurch gekennzeichnet, daß die erste Einrichtung (10) eine Radarmeßeinrichtung umfaßt.

5. Vorrichtung nach Anspruch 3, dadurch gekennzeichnet, daß die erste Einrichtung (10) eine optische Meßeinrichtung zur Messung der Laufzeit eines emittierenden, reflektierten und empfangenen Lichtsignals (Lidarmeßeinrichtung) umfaßt.

6. Vorrichtung nach Anspruch 3, dadurch gekennzeichnet, daß die erste Einrichtung (10) eine Bildverarbeitungseinrichtung umfaßt.

7. Vorrichtung nach Anspruch 3, dadurch gekennzeichnet, daß die zweite Einrichtung (20) wenigstens einen Sensor (22) zur Erfassung der Gaspedaländerung und wenigstens einen Sensor zur Erfassung der Bremspedalbetätigung aufweist.
